# EUROPEAN PATENT APPLICATION

(11) **EP 2 594 825 A1**
(43) Date of publication of application: **22.05.2013**
(21) Application number: 11806768.5
(22) Date of filing: 12.07.2011
(51) Int. Cl.: F16H 57/02, B60K 17/10, F16H 45/00, F16H 47/02

(54) **POWER TRANSMISSION DEVICE**

(30) Priority: 14.07.2010 JP 2010159565
(71) Applicant: Hitachi Construction Machinery Co., Ltd., Bunkyo-ku Tokyo 112-0004 (JP)
(72) Inventor: KURIHARA Takeshi, Tsuchiura-shi Ibaraki 300-0013 (JP)
(74) Representative: MERH-IP Matias Erny Reichl Hoffmann
(86) International application number: PCT/JP2011/065867
(87) International publication number: WO 2012/008438

(57) **Abstract**

A first rotational shaft (6), a second rotational shaft (10), and an output shaft (16) are juxtaposed and provided in a casing (2), and a drive gear (14) provided on the second rotational shaft (10) and a driven gear (19) of the output shaft (16) are meshed with each other. A clutch device (21), which transmits rotation, obtained by synthesizing rotations of the first and second rotational shafts (6), (10) or rotation of the second rotational shaft (10) to the output shaft (16) is provided. On the other hand, an intermediate gear (15) is provided on the second rotational shaft (10), and a counter gear (20) meshed with the intermediate gear (15) is provided on the outer periphery side of the first rotational shaft (6). A bearing device (23) is provided between the first rotational shaft (6) and the counter gear (20). This bearing device (23) is configured by combining four angular contact ball bearings (24) and arranged at a position corresponding to a meshed portion between the counter gear (20) and the intermediate gear (15) in the axial direction of the first rotational shaft (6).

## Description

### TECHNICAL FIELD

The present invention relates to a power transmission device mounted on a wheel-type construction machine such as a wheel loader and transmitting rotation of a hydraulic motor to an output shaft for driving.

### BACKGROUND ART

In general, wheel-type construction machines represented by a wheel-type shovel, a wheel loader and the like travel on a general road to a work site by rotating and driving wheels. The wheel-type construction machines are roughly divided into those driving the wheels by a hydraulic motor and those driving the wheels by converting power of an engine by a torque converter and a transmission. The type driving the wheels by a hydraulic motor will be described below.

The wheel-type construction machine is usually provided with a hydraulic motor for low-speed traveling, a hydraulic motor for high-speed traveling and a power transmission device, which transmits rotations of these two hydraulic motors to an output shaft for traveling. In this case, when the wheel-type construction machine travels on a general road, for example, the rotation of the hydraulic motor for high-speed traveling is transmitted to the output shaft for traveling, and when the machine performs an excavating work or the like in earth and sand, the rotation of the hydraulic motor for high-speed traveling and the rotation of the hydraulic motor for low-speed traveling are synthesized and transmitted to the output shaft for traveling.

The power transmission device is largely constituted by a casing, a first rotational shaft supported rotatably in the casing and rotated by the hydraulic motor for low-speed traveling, a second rotational shaft supported rotatably in the casing and rotated by the second hydraulic motor for high-speed traveling, the output shaft supported rotatably in the casing and to which the rotation of the second rotational shaft is transmitted, and a clutch device. Moreover, the clutch device is switched between a connected state in which the rotation of the first rotational shaft and the rotation of the second rotational shaft are synthesized and transmitted to the output shaft and a non-connected state in which only the rotation of the second rotational shaft is transmitted to the output shaft.

In the power transmission device configured as above, if the clutch device is brought into the non-connected state, only the rotation of the second rotational shaft is transmitted to the output shaft, and each wheel can be rotated at a high speed and with a low torque by the hydraulic motor for high-speed traveling. On the other hand, if the clutch device is brought into the connected state, the rotation of the first rotational shaft and the rotation of the second rotational shaft are transmitted in a synthesized state to the output shaft, and each wheel can be rotated at a low speed and with a high torque by the hydraulic motor for high-speed traveling and the hydraulic motor for low-speed traveling (Patent Documents 1 and 2).

### SUMMARY OF THE INVENTION

In the power transmission device according to the conventional art in the above-described Patent Document 2, an intermediate gear is provided in a fixed manner to the first rotational shaft and a counter gear is arranged capable of relative rotation with respect to the second rotational shaft through a bearing. This counter gear is configured to be meshed with the intermediate gear mounted on the first rotational shaft all the time, and the clutch device is provided between the second rotational shaft and the counter gear.

Therefore, when the clutch device is brought into the connected state and the second rotational shaft and the counter gear are connected to each other, the rotation of the first rotational shaft and the rotation of the second rotational shaft can be transmitted to the output shaft in the synthesized state. On the other hand, when the clutch device is brought into the non-connected state and the second rotational shaft and the counter gear are disconnected, only the rotation of the second rotational shaft can be transmitted to the output shaft.

Meanwhile, according to Patent Document 2, the counter gear provided on the second rotational shaft and the intermediate gear provided on the first rotational shaft are meshed with each other all the time. Thus, the counter gear and the intermediate gear are usually formed by using a helical gear in order to reduce noise when they are meshed with each other.

On the other hand, if the wheel loader is traveled so as to perform an excavation work such as shoving a bucket into the stacked earth and the sand, the traveling speed of the wheel loader is lowered by resistance of the earth and the sand. Thus, an operation state in which the rotation numbers of the first and second rotational shafts become the minimum (substantially 0) and the torque becomes the maximum (stall operation state) is repeated. In this stall operation state, a large thrust load acts on a meshed portion between the counter gear and the intermediate gear formed of helical gears, and this thrust load is transmitted to the bearing provided between the second rotational shaft and the counter gear.

As a result, if a ball bearing, for example, is used as a bearing provided between the second rotational shaft and the counter gear, repeated receiving of the thrust load from the counter gear damages the bearing in an early stage, which is a problem.

On the other hand, if a radial needle bearing and a thrust needle bearing are combined and used, for example, the thrust load from the counter gear can be appropriately received. However, a needle of each needle bearing cannot fully follow the rotation of the counter gear but occur to slip and smooth rotation of the counter gear is hindered, which is a problem.

In view of the above-described problems with the conventional art, it is an object to provide a power transmission device, which can rotate the counter gear smoothly with respect to the first rotational shaft.

(1) In order to solve the above-described problems, the present invention is applied to a power transmission device comprising a cylindrical casing, a first rotational shaft supported rotatably in the casing and driven by a first hydraulic motor rotating at a low speed; a second rotational shaft supported rotatably and juxtaposed with the first rotational shaft in the casing, having a drive gear provided thereon, and driven by a second hydraulic motor rotating at a high speed; an output shaft supported rotatably and juxtaposed with the second rotational shaft in the casing, and having a driven gear provided thereon and to which rotation of the second rotational shaft is transmitted by meshing between the driven gear and the drive gear; and a clutch device switched between a connected state in which rotation of the first rotational shaft and rotation of the second rotational shaft are synthesized and transmitted to the output shaft and a non-connected state in which the rotation of the second rotational shaft is transmitted to the output shaft.

The feature of the construction adopted by the present invention in claim 1 is that an intermediate gear is fixed to the second rotational shaft; a counter gear meshed with the intermediate gear is arranged on an outer periphery side of the first rotational shaft; a bearing device which supports the counter gear capable of relative rotation with respect to the first rotational shaft is provided between the counter gear and the first rotational shaft; the clutch device is arranged between the first rotational shaft and the counter gear; the bearing device is arranged at a position corresponding to the meshed portion between the counter gear and the intermediate gear; and the bearing device is arranged in the axial direction of the first rotational shaft by combining a plurality of angular contact ball bearings.

The intermediate gear is provided on the second rotational shaft rotating at a high speed, and the counter gear is provided on the first rotational shaft rotating at a low speed through the bearing device. Therefore, if the first rotational shaft and the counter gear are brought into the non-connected state by the clutch device, the counter gear can be supported capable of relative rotation with respect to the first rotational shaft by the bearing device combined with the plurality of angular contact ball bearings. Therefore, even if the counter gear rotates at a high speed exceeding 10000 rpm, for example, a ball does not occur to slip but appropriately can follow the rotation of the counter gear, and the counter gear can be rotated smoothly at a high speed.

On the other hand, the bearing device is arranged at the position corresponding to the meshed portion between the counter gear and the intermediate gear. Thus, even if a large thrust load occurs in the meshed portion between the counter gear and the intermediate gear in the stall operation state and this thrust load acts on the bearing device through the counter gear, for example, this thrust load can be reliably received by each of the angular contact ball bearings.

As a result, abnormal wear such as fretting wear and impressions caused by riding onto a lace surface can be reliably suppressed, and the lifetime of the bearing device can be prolonged. As a result, high-speed rotation of the counter gear and durability against the thrust load can be both realized by the bearing device, and thus, the lifetime of the power transmission device can be prolonged, and the reliability thereof can be enhanced.

(2) According to the present invention, the bearing device is configured as four tandem/back-to-back duplex bearings in which two pairs of tandem duplex bearings are combined back to back.

With this arrangement, the bearing device composed of four tandem/back-to-back duplex bearings in which two pairs of tandem duplex bearings are combined back-to-back can be arranged in the axial direction of the first rotational shaft. As a result, even if a space formed between the first rotational shaft and the counter gear is limited to small, the counter gear can be reliably supported by each of the angular contact ball bearings. Therefore, the size of the entire power transmission device can be further reduced, and contribution can be made to a reduction in a manufacturing cost.

(3) The present invention is configured such that the bearing device is arranged between the first rotational shaft and the counter gear while a fixed-position preload is applied to each of the angular contact ball bearings by using a nut screwed to the first rotational shaft.

With this arrangement, by tightening the nut, the fixed-position preload is applied to each of the angular contact ball bearings, and rigidity of the bearing device can be enhanced. As a result, even if the stall operation state is repeated, for example, the large thrust load acting on the counter gear can be reliably received by the bearing device. As a result, the counter gear, which receives the large thrust load, can be smoothly rotated for a long time, and reliability of the power transmission device can be enhanced.

(4) The present invention is configured such that the bearing device is arranged between the first rotational shaft and the counter gear while a fixed-pressure preload is applied to each of the angular contact ball bearings by using a spring.

With this arrangement, the fixed-pressure preload is applied to each of the angular contact ball bearings by using the spring, and thus, even if the counter gear is rotated at a high speed, each of the angular contact ball bearings can appropriately follow the rotation of this counter gear, and the counter gear can rotate smoothly. As a result, the counter gear and the first rotational shaft rotating at a high speed can be smoothly rotated relatively by the bearing device, and reliability of the power transmission device can be enhanced.

(5) The present invention is configured such that a brake device provided between the counter gear and the casing, which applies a braking force to the counter gear when each of the hydraulic motors is stopped and releases the braking force to the counter gear when each of the hydraulic motors is operating.

With this arrangement, when the first and second hydraulic motors are stopped, the brake device can apply the braking force to the counter gear. As a result, the braking force acts on the second rotational shaft through the intermediate gear meshed with the counter gear, and this braking force acts on the driven gear meshed with the drive gear, whereby the rotation of the output shaft can be prohibited. In this case, since the brake device applies the braking force to the counter gear capable of relative rotation with respect to the first rotational shaft, a braking torque can be kept smaller than the case of directly applying the braking force to the first rotational shaft or the second rotational shaft, for example, and the size of the brake device can be further reduced.

(6) The present invention is configured such that the clutch device has a plurality of rotation axis side plates rotating integrally with the first rotational shaft and a plurality of gear side plates rotating integrally with the counter gear; the brake device has a plurality of casing side plates provided on the casing and a plurality of gear side plates rotating integrally with the counter gear; the counter gear is composed of a cylindrical portion arranged on the outer periphery side of the first rotational shaft through the bearing device and extending in the axial direction, a gear portion provided on the outer periphery side of the cylindrical portion and meshed with the intermediate gear, and plate mounting portions provided on both sides in the axial direction of the cylindrical portion; and each of the gear side plates of the clutch device is provided on the plate mounting portion provided on one side in the axial direction of the cylindrical portion, and each of the gear side plates of the brake device is provided on the plate mounting portion provided on the other side in the axial direction of the cylindrical portion.

With this arrangement, by providing each of the gear side plates of the clutch device on one side in the axial direction of the cylindrical portion constituting the counter gear and by providing each of the gear side plates of the brake device on the other side in the axial direction of the cylindrical portion, the clutch device and the brake device can be arranged coaxially on the axis line of the first rotational shaft. Accordingly, a space accommodating the clutch device and the brake device can be kept small, and the size of the entire power transmission device can be further reduced.

(7) The present invention is configured such that the first rotational shaft, the second rotational shaft, and the output shaft are arranged in parallel in the casing; the intermediate gear, the counter gear, and the bearing device are arranged in the casing on the same plane perpendicular to the axis lines of the first and second rotational shafts and the output shaft; the drive gear, the driven gear, and the clutch device are arranged in the casing on the same plane perpendicular to the axis lines of the first and second rotational shafts and the output shaft adjacent to the intermediate gear and the counter gear; and the brake device is arranged in the casing, located on the opposite side to the clutch device sandwiching the counter gear therebetween.

With this arrangement, the bearing device can be arranged by using a space where the intermediate gear is meshed with the counter gear, and the clutch device can be arranged by using a space where the drive gear is meshed with the driven gear. As a result, the axial dimension of the casing along the axis lines of each of the rotational shafts and the output shaft can be kept small, and the size of the entire power transmission device can be further reduced.

### BRIEF DESCRIPTION OF THE DRAWINGS

Fig. 1 is a sectional view illustrating a power transmission device according to a first embodiment of the present invention.
Fig. 2 is an enlarged sectional view illustrating a bearing device, a first rotational shaft, a counter gear, a clutch device, a brake device and the like in Fig. 1.
Fig. 3 is an enlarged cross-sectional view of an essential part of the bearing device and the like in Fig. 2.
Fig. 4 is a hydraulic circuit diagram including first and second hydraulic motors, the clutch device, the brake device and the like of the power transmission device.
Fig. 5 is an enlarged sectional view similar to Fig. 2 illustrating a bearing device, a first rotational shaft, a counter gear, a clutch device, a brake device and the like according to a second embodiment.
Fig. 6 is an enlarged cross-sectional view illustrating an essential part of the bearing device and the like in Fig. 5.

### MODE FOR CARRYING OUT THE INVENTION

Hereinafter, a power transmission device to be applied to an embodiment in the present invention will be in detail explained with reference to the attached drawings.

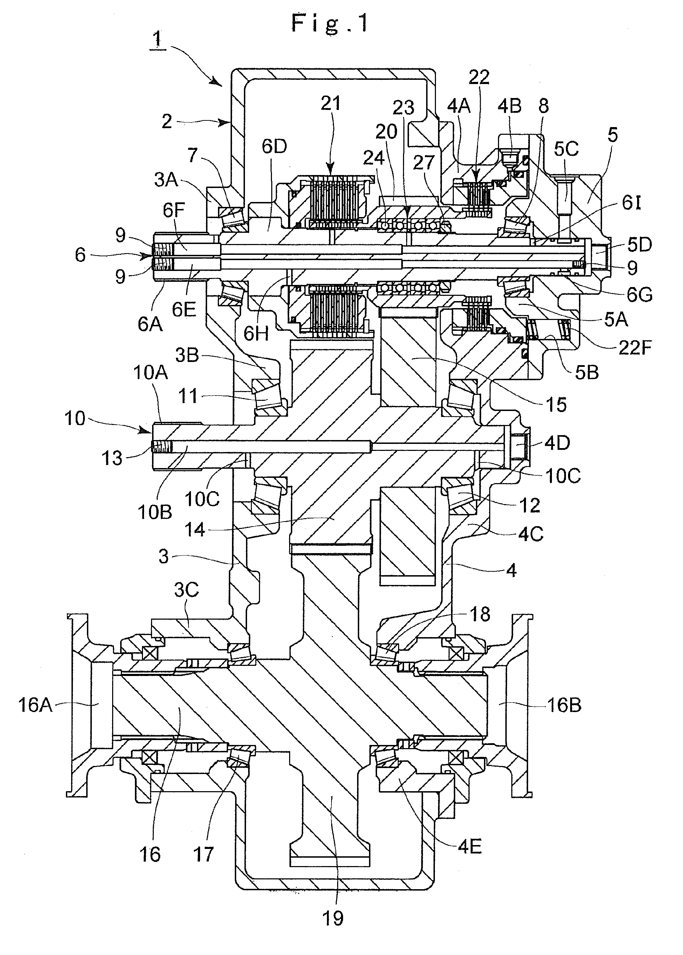

First, Figs. 1 to 4 illustrate a first embodiment of the power transmission device according to the present invention.

In the figures, designated at 1 is the power transmission device, and the power transmission device 1 is used for a vehicle drive unit of a wheel-type construction machine such as a wheel loader, a wheel-type shovel and the like, for example. This power transmission device 1 transmits rotations of a first hydraulic motor 30 and a second hydraulic motor 31 constituting a hydrostatic transmission circuit (HST circuit), which will be described later, to an output shaft 16 for driving wheels. Here, the power transmission device 1 is constituted by a casing 2, a first rotational shaft 6, a second rotational shaft 10, a drive gear 14, an intermediate gear 15, the output shaft 16, a driven gear 19, a counter gear 20, a clutch device 21, a brake device 22, a bearing device 23 and the like, which will be described later.

Designated at 2 is the casing forming an outer shell of the power transmission device 1, and the casing 2 is formed as a generally hollow cylindrical body and rotatably supports the first and second rotational shafts 6 and 10, and the output shaft 16, which will be described later. The casing 2 accommodates the drive gear 14, the intermediate gear 15, the driven gear 19, the counter gear 20, the clutch device 21, the brake device 22, the bearing device 23 and the like, which will be described later, therein. The casing 2 is roughly composed of a front casing 3 located on the front side in the longitudinal direction, a rear casing 4 located on the rear side, and a rear cover 5 mounted on the rear side of the rear casing 4.

Here, a shaft support portion 3A which supports the front portion side of the first rotational shaft 6, which will be described later, is provided on the upper end side of the front casing 3, a shaft support portion 3B which supports the front portion side of the second rotational shaft 10, which will be described later, is provided on an intermediate portion in the vertical direction of the front casing 3, and a cylindrical portion 3C which supports the front portion side of the output shaft 16, which will be described later, is provided on the lower end side of the front casing 3.

On the other hand, a brake accommodating cylinder portion 4A which accommodates the brake device 22 and a brake release pressure supply passage 4B opened in the brake accommodating cylinder portion 4A, which will be described later, are provided on the upper end side of the rear casing 4. A shaft support portion 4C which supports the rear portion side of the second rotational shaft 10 and a lubricant oil supply passage 4D communicating with a lubricant oil passage 10B of the second rotational shaft 10, which will be described later, are provided on an intermediate portion in the vertical direction of the rear casing 4. Further, a shaft support portion 4E, which supports the rear portion side of the output shaft 16, is provided on the lower end side of the rear casing 4.

On the rear cover 5, a shaft support portion 5A which supports the rear end portion of the first rotational shaft 6 and a spring accommodating hole 5B having a bottom for accommodating a spring 22F of the brake device 22, which will be described later, are formed in the axial direction. A clutch pressure supply passage 5C communicating with an annular groove 6G of the first rotational shaft 6, which will be described later, is provided on the upper end side of the rear cover 5, and a lubricant oil supply passage 5D communicating with a lubricant oil passage 6F of the first rotational shaft 6, which will be described later, is provided on the rear end portion of the rear cover 5.

Next, the first rotational shaft 6, the second rotational shaft 10, the drive gear 14, the intermediate gear 15, the output shaft 16, the driven gear 19, the counter gear 20 and the like provided on the casing 2 will be described.

Indicated at 6 is the first rotational shaft provided rotatably in the casing 2, and the first rotational shaft 6 is supported by the shaft support portion 3A of the front casing 3 through a tapered roller bearing 7 on the front portion side and is supported by the shaft support portion 5A of the rear cover 5 through a tapered roller bearing 8 on the rear portion side. A shaft spline portion 6A is formed in the front end portion of the first rotational shaft 6, and the shaft spline portion 6A is configured to protrude forward from the front casing 3 and to be spline-connected with the first hydraulic motor 30, which will be described later.

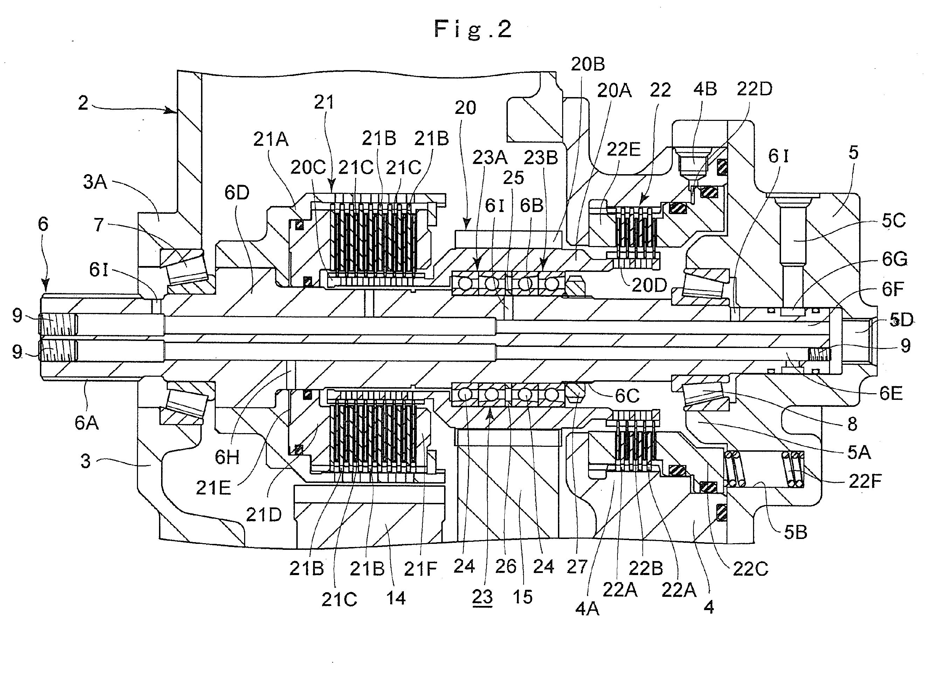

As shown in Fig. 2, a columnar and stepped bearing mounting portion 6B on which a bearing device 23, which will be described later, is mounted and a male screw portion 6C into which a nut 27, which will be described later, is screwed are provided on an intermediate portion in the axial direction of the first rotational shaft 6. Further, a flange-shaped clutch mounting portion 6D on which the clutch device 21, which will be described later, is mounted is provided between the shaft spline portion 6A and the bearing mounting portion 6B of the first rotational shaft 6.

On the other hand, a clutch pressure passage 6E and a lubricant oil passage 6F are provided in the axial direction, respectively, inside the first rotational shaft 6. The both end portions in the longitudinal direction of the clutch pressure passage 6E are closed by plugs 9. On the other hand, the front end portion of the lubricant oil passage 6F is closed by the plug 9, while the rear end portion of the lubricant oil passage 6F is opened toward the lubricant oil supply passage 5D of the rear cover 5.

The annular groove 6G is recessed over the whole periphery of the outer periphery side on the rear end portion of the first rotational shaft 6, and the clutch pressure passage 6E of the first rotational shaft 6 and the clutch pressure supply passage 5C of the rear cover 5 are configured to communicate with each other through the annular groove 6G. A single clutch pressure discharge passage 6H extending in the radial direction from the clutch pressure passage 6E and four lubricant oil discharge passages 6I extending in the radial direction from the lubricant oil passage 6F are provided inside the first rotational shaft 6.

Indicated at 10 is the second rotational shaft provided in parallel with the first rotational shaft 6 and rotatably in the casing 2, and the second rotational shaft 10 is arranged on the lower side of the first rotational shaft 6 adjacent thereto. The second rotational shaft 10 is supported by the shaft support portion 3B of the front casing 3 through the tapered roller bearing 11 on the front portion side and is supported by the shaft support portion 4C of the rear casing 4 through the tapered roller bearing 12 on the rear portion side. The shaft spline portion 10A is formed in the front end portion of the second rotational shaft 10, and this shaft spline portion 10A is configured to protrude forward from the front casing 3 and is spline-connected with the second hydraulic motor 31, which will be described later.

Here, the lubricant oil passage 10B is provided in the axial direction inside the second rotational shaft 10, and the front end portion of this lubricant oil passage 10B is closed by a plug 13, while the rear end portion of the lubricant oil passage 10B is opened toward the lubricant oil supply passage 4D of the rear casing 4. Further, two lubricant oil derivation passages 10C extending in the radial direction from the lubricant oil passage 10B are provided on both ends in the axial direction of the second rotational shaft 10.

Indicated at 14 is the drive gear provided fixedly to the intermediate portion in the axial direction of the second rotational shaft 10, and the drive gear 14 is integrally formed with the second rotational shaft 10 and rotates integrally with the second rotational shaft 10. The drive gear 14 is configured to be meshed with the driven gear 19 of the output shaft 16, which will be described later, all the time, whereby the rotation of the second rotational shaft 10 is transmitted to the output shaft 16 through the driven gear 19.

Indicated at 15 is the intermediate gear provided on the second rotational shaft 10 coaxially with the drive gear 14. This intermediate gear 15 is arranged on the rear side of the drive gear 14 adjacent thereto and is fixedly mounted on the second rotational shaft 10 by using means such as spline connection and the like. On the other hand, the intermediate gear 15 is meshed with the counter gear 20, which will be described later, all the time.

Indicated at 16 is the output shaft provided in parallel with the second rotational shaft 10 and rotatably in the casing 2. This output shaft 16 is arranged on the lower side of the second rotational shaft 10 adjacent to and outputs the rotations of the first rotational shaft 6 and the second rotational shaft 10 to a wheel axle (not shown) outside. Here, the output shaft 16 is supported by the cylindrical portion 3C of the front casing 3 through the tapered roller bearing 17 on the front portion side and supported by the shaft support portion 4E of the rear casing 4 through the tapered roller bearing 18 on the rear portion side. Connecting flanges 16A and 16B are respectively mounted on the both end portions in the longitudinal direction of the output shaft 16 and the connecting flange 16A on the front end side protrudes forward from the front casing 3, while the connecting flange 16B on the rear end side protrudes rearward from the rear casing 4.

Indicated at 19 is the driven gear fixedly provided on the intermediate portion in the axial direction of the output shaft 16, and the driven gear 19 is integrally formed with the output shaft 16 and rotates integrally with the output shaft 16. In this case, the driven gear 19 is meshed with the drive gear 14 all the time, and the output shaft 16 is configured to rotate together with the second rotational shaft 10 all the time.

Designated at 20 is the counter gear arranged on the outer periphery side of the first rotational shaft 6 through the bearing device 23, which will be described later, and the counter gear 20 is meshed with the intermediate gear 15 fixed to the second rotational shaft 10 all the time. Here, as shown in Fig. 2, the counter gear 20 is configured to include a cylindrical portion 20A extending in the axial direction of the first rotational shaft 6 and a gear portion 20B provided on the outer periphery side of the intermediate portion in the axial direction of the cylindrical portion 20A and meshed with the intermediate gear 15.

In this case, the counter gear 20 is meshed with the intermediate gear 15 all the time and thus, rotates at a high speed exceeding 10000 rpm, for example. Therefore, the gear portion 20B of the counter gear 20 and the intermediate gear 15 are formed of helical gears in order to reduce the noise when being meshed. One side (front side) in the axial direction of the cylindrical portion 20A constituting the counter gear 20 is a front-side plate mounting portion 20C on which each gear side plate 21C of the clutch device 21, which will be described later, is mounted, while the other side (rear side) in the axial direction of the cylindrical portion 20A is a rear-side plate mounting portion 20D on which each of the gear side plates 22B of the brake device 22, which will be described later, is mounted.

Here, the counter gear 20 and the intermediate gear 15 are arranged on the same plane perpendicular to the axis lines of the first and second rotational shafts 6 and 10 and the output shaft 16. On the other hand, the drive gear 14 and the driven gear 19 are arranged on the same plane perpendicular to the axis lines of the first and second rotational shafts 6 and 10 and the output shaft 16 adjacent to the intermediate gear 15 and the counter gear 20.

Subsequently, the configuration of the clutch device 21 and the brake device 22 will be described.

Designated at 21 is the clutch device provided between the first rotational shaft 6 and the counter gear 20. This clutch device 21 is formed of a wet multi-plate clutch, for example, and connects the first rotational shaft 6 to the counter gear 20 or disconnects the same. Further, the clutch device 21 is arranged above the drive gear 14, and the clutch device 21, the drive gear 14, and the driven gear 19 are arranged on the same plane in the casing 2.

Here, as shown in Fig. 2, the clutch device 21 is largely constituted by a cylindrical clutch case 21A having a large diameter fixed to the clutch mounting portion 6D of the first rotational shaft 6, a plurality of disk-shaped rotation axis side plates 21B arranged on the inner periphery side of the clutch case 21A, a plurality of disk-shaped gear side plates 21C arranged on the outer periphery side of the front-side plate mounting portion 20C provided on the counter gear 20, a piston 21D provided movably in the axial direction on the inner periphery side of the clutch case 21A, an oil chamber 21E formed between the clutch case 21A and the piston 21D, and a backup ring 21F provided on the inner periphery side of the clutch case 21A and regulating movement of axial direction of the rotation axis side plate 21B and the gear side plate 21C.

In this case, each of the rotation axis side plates 21B and each of the gear side plates 21C are arranged so as to alternately overlap each other in the axial direction of the first rotational shaft 6, and friction facing is provided on the surfaces opposing each other. A washer-shaped return spring (not shown) is provided between each of the rotation axis side plates 21B and each of the gear side plates 21C, respectively, and the rotation axis side plates 21B and the gear side plates 21C are configured to be kept in the non-contact state by the return spring all the time.

If pressurized oil (clutch pressurized oil) from a hydraulic pump 35, which will be described later, is supplied to the oil chamber 21E of the clutch device 21 through the clutch pressure passage 6E, the clutch pressure discharge passage 6H and the like of the first rotational shaft 6, the piston 21D presses each of the rotation axis side plates 21B and each of the gear side plates 21C in the axial direction toward the backup ring 21F against each of the return springs (not shown). As a result, the rotation axis side plates 21B and the gear side plates 21C are frictionally engaged and integrated, and thus, the first rotational shaft 6 is connected to the counter gear 20, and the rotation of the first rotational shaft 6 can be transmitted to the intermediate gear 15 through the counter gear 20.

On the other hand, if the supply of the clutch pressurized oil to the oil chamber 21E is stopped, each of the rotation axis side plates 21B and each of the gear side plates 21C are spaced apart from each other by the return spring and kept in the non-contact state. As a result, the connection between the counter gear 20 and the first rotational shaft 6 is released (disconnected), and the transmission of the rotation from the first rotational shaft 6 to the counter gear 20 is shut off.

Designated at 22 is the brake device provided between the counter gear 20 and the casing 2. This brake device 22 is composed of a wet multi-plate negative brake, for example, and it applies a braking force to the counter gear 20 when the first and second hydraulic motors 30 and 31 are stopped and releases the braking force to the counter gear 20 when the first and second hydraulic motors 30 and 31 are operated. Further, the brake device 22 is arranged in the casing 2 on the opposite side to the clutch device 21 sandwiching the counter gear 20 between them.

Here, as shown in Fig. 2, the brake device 22 is largely constituted by a plurality of disk-shaped casing side plates 22A arranged on the inner periphery side of the brake accommodating cylinder portion 4A provided on the rear casing 4, a plurality of disk-shaped gear side plates 22B arranged on the outer periphery side of the rear-side plate mounting portion 20D provided on the counter gear 20, a piston 22C provided movably in the axial direction on the inner periphery side of the brake accommodating cylinder portion 4A, an oil chamber 22D formed between the brake accommodating cylinder portion 4A and the piston 22C, a backup ring 22E provided on the inner periphery side of the brake accommodating cylinder portion 4A and regulating the movement in the axial direction of the casing side plates 22A and the gear side plates 22B, and a spring 22F arranged in a spring accommodating hole 5B of the rear cover 5 and biasing the piston 22C toward the backup ring 22E all the time.

In this case, each of the casing side plates 22A and each of the gear side plates 22B are arranged so as to alternately overlap each other in the axial direction of the first rotational shaft 6, and friction facing is provided on the surfaces opposing each other. Each of the casing side plates 22A and each of the gear side plates 22B are configured to be frictionally engaged with each other by being pressed by the piston 22C biased by the spring 22F, and the braking force is applied to the counter gear 20.

That is, if the pressurized oil (brake release pressurized oil) from a hydraulic pump 28, which will be described later, is supplied to the oil chamber 22D of the brake device 22 through the brake release pressure supply passage 4B of the rear casing 4, the piston 22C presses each of the casing side plates 22A and each of the gear side plates 22B in the axial direction toward the rear cover 5 against the spring 22F. As a result, each of the casing side plates 22A and each of the gear side plates 22B are spaced apart from each other and kept in the non-contact state, and the braking force to the counter gear 20 can be released.

On the other hand, when the supply of the brake release pressurized oil to the oil chamber 22D is stopped, each of the rotation axis side plates 21B and each of the gear side plates 21C are frictionally engaged with each other by the spring 22F, and the braking force can be applied to the counter gear 20.

Subsequently, the bearing device 23 applied to the first embodiment will be described.

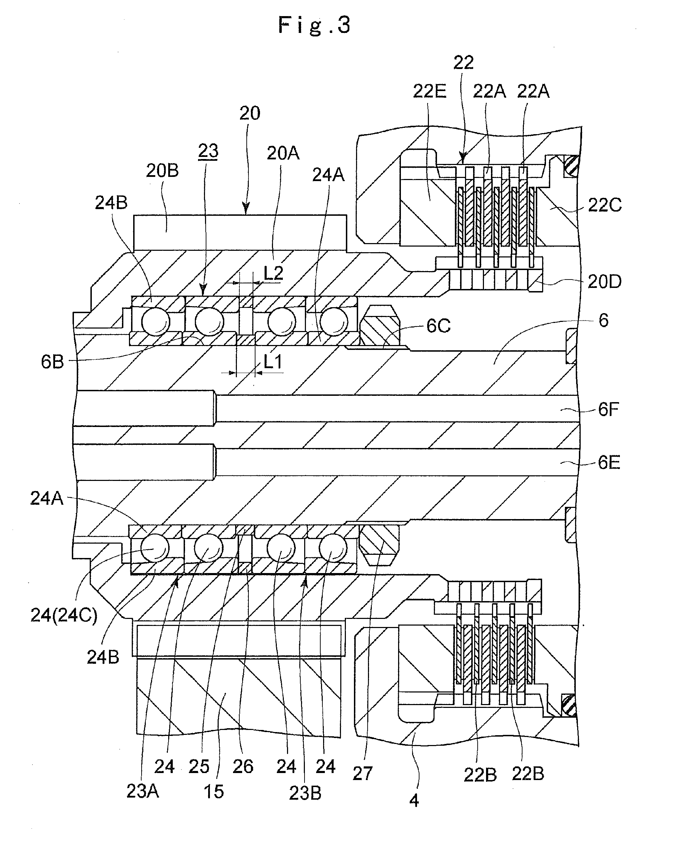

Designated at 23 is a bearing device provided between the bearing mounting portion 6B of the first rotational shaft 6 and the cylindrical portion 20A of the counter gear 20, and the bearing device 23 supports the counter gear 20 being capable of relative rotation with respect to the first rotational shaft 6. Further, the bearing device 23 is arranged at a position corresponding to the meshed portion between the counter gear 20 and the intermediate gear 15, and these bearing device 23, the counter gear 20, and the intermediate gear 15 are arranged on the same plane perpendicular to the axis lines of each of the rotational shafts 6 and 10 and the output shaft 16 in the casing 2. As shown in Fig. 3, this bearing device 23 is configured by combining four angular contact ball bearings 24, which will be specifically described below.

Here, the angular contact ball bearing 24 is composed of an inner race 24A which the outer peripheral surface of the bearing mounting portion 6B pressed into, an outer race 24B loose fitted into the inner peripheral surface of the cylindrical portion 20A, and a plurality of balls 24C provided rotatably between the inner race 24A and the outer race 24B. This angular contact ball bearing 24 has a large rigidity to a load in the thrust direction (axial direction of the first rotational shaft 6) by inclining a straight line connecting a contact point between the inner race 24A and the ball 24C and a contact point between the outer race 24B and the ball 24C to the radial direction (direction perpendicular to the axial direction of the first rotational shaft 6) only by a certain angle (contact angle).

In this case, in the bearing device 23, a pair of tandem duplex bearings 23A in which the front face and the back face of two angular contact ball bearings 24 are opposed and combined (tandem duplex) and a pair of tandem duplex bearings 23B in which two angular contact ball bearings 24 are similarly tandem-duplex combined are combined (back-to-back combined) with the back faces opposed to each other. That is, the bearing device 23 is entirely composed of four tandem/back-to-back duplex bearings of four angular contact ball bearings 24 by combining the two pairs of tandem duplex bearings 23A and 23B on the back faces to each other. Further, the bearing device 23 is arranged in the axial direction of the first rotational shaft 6 at a position corresponding to the meshed portion between the counter gear 20 and the intermediate gear 15 and configured to be preloaded in the axial direction by the nut 27, which will be described later.

Indicated at 25 is a cylindrical inner race side spacer arranged between two pairs of back-face combined tandem duplex bearings 23A and 23B. This inner race side spacer 25 is inserted and fitted on the outer periphery side of the bearing mounting portion 6B of the first rotational shaft 6 while sandwiching the two pairs of tandem duplex bearings 23A and 23B. Therefore, the inner race side spacer 25 is brought into abut against each of the inner races 24A of the adjacent to angular contact ball bearings 24 between the two pairs of tandem duplex bearings 23A and 23B, whereby the interval is set.

Indicated at 26 is a cylindrical outer race side spacer arranged between the two pairs of back-face combined tandem duplex bearings 23A and 23B. This outer race side spacer 26 is inserted and fitted on the inner periphery side of the cylindrical portion 20A of the counter gear 20 while sandwiching the two pairs of tandem duplex bearings 23A and 23B. Therefore, the outer race side spacer 26 is brought into abut against each of the outer races 24B of the adjacent to angular contact ball bearings 24 between the two pairs of tandem duplex bearings 23A and 23B, whereby the interval is set. In this case, as shown in Fig. 3, an axial dimension L1 of the inner race side spacer 25 is set to be larger than an axial dimension L2 of the outer race side spacer 26 (L1 > L2).

Indicated at 27 is a nut for preloading screwed in the male screw portion 6C of the first rotational shaft 6, and the nut 27 gives a fixed-position preload to the four angular contact ball bearings 24 constituting the bearing device 23. Here, the nut 27 is configured to abut against the inner race 24A of the angular contact ball bearing 24 located at the last portion in the four angular contact ball bearings 24 and presses each of the angular contact ball bearings 24 in the axial direction in accordance with a screwed-in amount to the male screw portion 6C.

As described above, by giving an appropriate fixed-position preload to the four angular contact ball bearings 24 by using the nut 27, rigidity of each of these angular contact ball bearings 24 can be enhanced. As a result, the rigidity of the bearing device 23 which supports the counter gear 20 can be enhanced, and the large thrust load acting on the counter gear 20 can be reliably received by the bearing device 23.

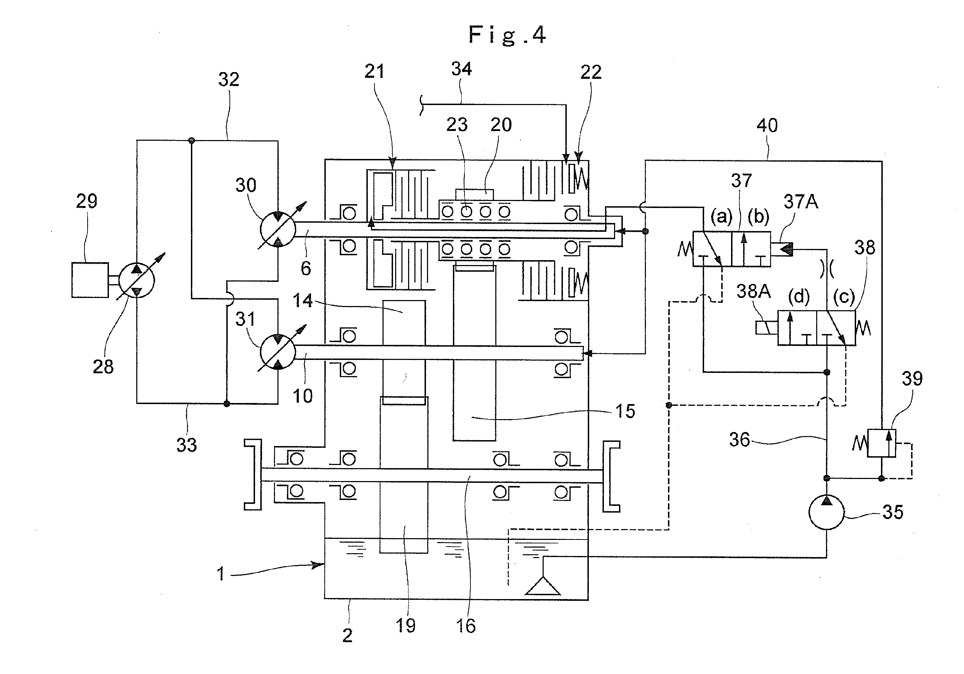

Subsequently, a hydraulic circuit including the first hydraulic motor 30, which drives the first rotational shaft 6, the second hydraulic motor 31, which drives the second rotational shaft 10, the clutch device 21, and the brake device 22 will be described with reference to Fig. 4.

In the figure, indicated at 28 is a variable capacity hydraulic pump, and the hydraulic pump 28 is driven by an engine 29 and discharges the pressurized oil for operation to the first and second hydraulic motors 30 and 31, which will be described later.

Indicated at 30 is the first hydraulic motor for low-speed traveling, and the first hydraulic motor 30 rotates and drives wheels of the wheel-type construction machine (none of them is shown) at a low speed and with a high torque. The first hydraulic motor 30 is configured to be fixed to the front casing 3 of the power transmission device 1 shown in Fig. 1 and spline-connected to the shaft spline portion 6A of the first rotational shaft 6.

Indicated at 31 is the second hydraulic motor for high-speed traveling, and the second hydraulic motor 31 rotates and drives wheels of the wheel-type construction machine at a high speed and with a low torque. The second hydraulic motor 31 is configured to be fixed to the front casing 3 of the power transmission device 1 and spline-connected to the shaft spline portion 10A of the second rotational shaft 10.

Indicated at 32 and 33 are a pair of main lines which connect between the hydraulic pump 28 and the first hydraulic motor 30 and between the hydraulic pump 28 and the second hydraulic motor 31. Each of these main lines 32 and 33 connects the first and second hydraulic motors 30 and 31 to the hydraulic pump 28 in parallel, respectively. As a result, the pressurized oil discharged from the hydraulic pump 28 is supplied to the first and second hydraulic motors 30 and 31 through the main lines 32 and 33 at the same time. The hydraulic pump 28, the first and second hydraulic motors 30 and 31, each of the main lines 32 and 33 constitute a hydrostatic transmission circuit (HST circuit).

Indicated at 34 is the brake release pressure passage, which supplies a part of the pressurized oil flowing through the main line 32 to the brake device 22 as the brake release pressurized oil. One end side of this brake release pressure passage 34 is connected to a third hydraulic pump (not shown) different from the hydraulic pump 28 and a hydraulic pump 35, which will be described later, while the other end side of the brake release pressure passage 34 is connected to the brake release pressure supply passage 4B of the rear casing 4 illustrated in Fig. 1 and the like. When the first and second hydraulic motors 30 and 31 are operated by the hydraulic pump 28, the brake release pressurized oil is supplied into the oil chamber 22D of the brake device 22 from the third hydraulic pump through the brake release pressure passage 34.

Indicated at 35 is another hydraulic pump, and the hydraulic pump 35 discharges a part of drain oil stored in the casing 2 of the power transmission device 1 to the oil passage 36 as clutch pressurized oil supplied to the clutch device 21.

Indicated at 37 is a 3-port 2-position hydraulic-pilot type directional control valve provided in the middle of the oil passage 36, located between the hydraulic pump 35 and the clutch device 21. This directional control valve 37 holds a valve position (a) when a pilot pressure is not inputted into a hydraulic pilot portion 37A and is switched to a valve position (b) when the pilot pressure is inputted. When the directional control valve 37 is switched to the valve position (b), the clutch pressurized oil discharged from the hydraulic pump 35 is led into the clutch pressure supply passage 5C of the rear cover 5 through the oil passage 36 and supplied into the oil chamber 21E of the clutch device 21 through the annular groove 6G of the first rotational shaft 6, the clutch pressure passage 6E, and the clutch pressure discharge passage 6H.

Indicated at 38 is a 3-port 2-position electromagnetic-pilot type directional switching valve provided in the middle of the oil passage 36. An electromagnetic pilot portion 38A of this directional control valve 38 is connected to a switch (not shown), which switches between the connected state and the non-connected state of the clutch device 21. When this switch is switched to the clutch connection side, a signal is inputted into the electromagnetic pilot portion 38A, and thus, the directional control valve 38 is switched from a valve position (c) to a valve position (d), and the pilot pressure is inputted into the hydraulic pilot portion 37A of the directional control valve 37.

Indicated at 39 is a relief valve provided in the middle of the oil passage 36, located between the hydraulic pump 35 and the directional control valve 38, and the relief valve 39 supplied the pressurized oil in the oil passage 36 to the oil passage 40 as lubricant oil when the pressure in the oil passage 36 exceeds a set pressure. The lubricant oil supplied from the oil passage 40 is led to the lubricant oil passage 6F of the first rotational shaft 6 through the lubricant oil supply passage 5D of the rear cover 5 and then, supplied to the tapered roller bearings 7 and 8, the clutch device 21, and the bearing device 23 through each of the lubricant oil discharge passages 6I. On the other hand, the other lubricant oil supplied from the oil passage 40 is led to the lubricant oil passage 10B of the second rotational shaft 10 through the lubricant oil supply passage 4D of the rear casing 4 and then, supplied to the tapered roller bearings 11 and 12 through each of the lubricant oil derivation passages 10C.

The power transmission device 1 according to the first embodiment has the above-described configuration, and an operation of the power transmission device 1 when a wheel loader (not shown) on which the power transmission device 1 is mounted is traveling will be described below.

When the wheel loader is stopped and the engine 29 illustrated in Fig. 4 is in a non-operated state, the hydraulic pump 28 does not discharge the pressurized oil, and thus, the first and second hydraulic motors 30 and 31 are kept in the stopped state, and supply of the brake release pressurized oil to the oil chamber 22D of the brake device 22 is stopped. Therefore, each of the rotation axis side plates 21B and each of the gear side plates 21C of the brake device 22 are pressed by the spring 22F and frictionally engaged with each other, whereby the braking force is applied to the counter gear 20.

Therefore, the braking force acts on the second rotational shaft 10 through the intermediate gear 15 meshed with the counter gear 20, and this braking force acts on the output shaft 16 through the driven gear 19 meshed with the drive gear 14. As a result, the rotation of the output shaft 16 for driving the wheels (not shown) of the wheel loader can be prohibited, and the wheel loader can be kept stopped (parked).

In this case, since the brake device 22 applies the braking force to the counter gear 20 provided capable of relative rotation with respect to the first rotational shaft 6, the braking torque can be kept smaller than the case of directly applying the braking force to the first rotational shaft 6 or the second rotational shaft 10, for example. As a result, the size of the brake device 22 can be reduced, and the size of the entire power transmission device 1 can be reduced.

Subsequently, when the wheel loader is traveling on a general road and the like, the hydraulic pump 28 is driven by the engine 29, and the pressurized oil for operation is supplied to the first and second hydraulic motors 30 and 31 through the main lines 32 and 33 from the hydraulic pump 28.

Apart of the pressurized oil discharged from the hydraulic pump 28 is supplied to the brake release pressure supply passage 4B of the rear casing 4 through the brake release pressure passage 34 and this brake release pressurized oil is supplied into the oil chamber 22D of the brake device 22. As a result, the piston 22C presses each of the casing side plates 22A and each of the gear side plates 22B in the axial direction toward the rear cover 5 against the spring 22F. Thus, each of the casing side plates 22A and each of the gear side plates 22B are spaced apart from each other and kept in the non-contact state, and the braking force to the counter gear 20 can be released.

Here, when the wheel loader travels on a general road and the like, the output shaft 16 of the power transmission device 1 needs to be rotated at a high speed. Therefore, the switch (not shown), which switches between the connected state and the non-connected state of the clutch device 21 is set to the clutch non-connected side. As a result, the directional control valve 38 illustrated in Fig. 4 holds the valve position (c) and the directional control valve 37 also holds the valve position (a). As a result, the supply of the clutch pressurized oil to the oil chamber 21E of the clutch device 21 is stopped, and each of the rotation axis side plates 21B and each of the gear side plates 21C are spaced apart from each other by the return spring (not shown) and kept in the non-contact state. Therefore, the connection between the counter gear 20 and the first rotational shaft 6 is released, and the counter gear 20 becomes capable of relative rotation with respect to the first rotational shaft 6.

As described above, if the braking force to the counter gear 20 is released by the brake device 22 and the connection between the counter gear 20 and the first rotational shaft 6 is disconnected by the clutch device 21, the first rotational shaft 6 rotates at a low speed by the first hydraulic motor 30 for low-speed traveling, while the second rotational shaft 10 rotates at a high speed by the second hydraulic motor 31 for high-speed traveling.

The rotation of the second rotational shaft 10 is transmitted to the output shaft 16 through the driven gear 19 meshed with the drive gear 14, and the output shaft 16 rotates at a high speed with rotational speed corresponding to a ratio of numbers of teeth between the drive gear 14 and the driven gear 19 with respect to the rotational speed of the second rotational shaft 10. As a result, the wheel loader can be traveled at a high speed.

Here, the clutch device 21 is provided between the first rotational shaft 6 and the counter gear 20 and when the output shaft 16 is rotated at a high speed by the second rotational shaft 10, the first rotational shaft 6 and the counter gear 20 are in the non-connected state. On the other hand, the counter gear 20 is meshed with the intermediate gear 15 fixed to the second rotational shaft 10 and thus, it is rotated at a high speed (idle rotation) in an independent state of the first rotational shaft 6. That is, the first rotational shaft 6 and the counter gear 20 can rotate relatively by the bearing device 23.

In this case, in the first embodiment, the bearing device 23 is provided between the first rotational shaft 6 and the counter gear 20 and is configured as a four tandem/back-to-back duplex bearings composed of four angular contact ball bearings 24 by combining the pair of tandem duplex bearings 23A in which two angular contact ball bearings 24 are tandem-duplex combined and the pair of tandem duplex bearings 23B in which the two angular contact ball bearings 24 are similarly tandem-duplex combined with the back faces opposed to each other.

As a result, even if the counter gear 20 rotates at a high speed exceeding 10000 rpm, for example, the ball 24C of each of the angular contact ball bearings 24 does not occur to slip but appropriately can follow the rotation of the counter gear 20, and the counter gear 20 can be rotated smoothly at a high speed.

In this case, the pressure in the oil passage 36 exceeds the set pressure when the clutch device 21 is in the non-connected state and the output shaft 16 is rotating at a high speed, the relief valve 39 leads out the pressurized oil in the oil passage 36 to the oil passage 40 as the lubricant oil. The lubricant oil supplied from the oil passage 40 is led to the lubricant oil passage 6F of the first rotational shaft 6 through the lubricant oil supply passage 5D of the rear cover 5 and also led to the lubricant oil passage 10B of the second rotational shaft 10 through the lubricant oil supply passage 4D of the rear casing 4. As a result, the lubricant oil led to the lubricant oil passage 6F of the first rotational shaft 6 is supplied to the tapered roller bearings 7 and 8, the clutch device 21, and the bearing device 23 through each of the lubricant oil discharge passages 6I and appropriately lubricates them. In addition, lubricant oil led to the lubricant oil passage 10B of the second rotational shaft 10 is supplied to the tapered roller bearings 11 and 12 through each of the lubricant oil derivation passages 10C and appropriately lubricates them.

Subsequently, when an operation to make the wheel loader travel during an excavating operation and to shove the bucket into the earth and the sand, for example, the output shaft 16 of the power transmission device 1 needs to be rotated at a low speed and with a high torque. Thus, in the excavating operation, the switch (not shown), which switches the clutch device 21 between the connected state and the non-connected state, is switched to the clutch connected side. As a result, the directional control valve 38 illustrated in Fig. 4 is switched to the valve position (d) and the directional control valve 37 is also switched to the valve position (b).

Therefore, the pressurized oil (clutch pressurized oil) from the hydraulic pump 35 is led to the clutch pressure supply passage 5C of the rear cover 5 through the oil passage 36 and then, supplied to the oil chamber 21E of the clutch device 21 through the annular groove 6G provided in the first rotational shaft 6, the clutch pressure passage 6E, and the clutch pressure discharge passage 6H. Thus, the rotation axis side plates 21B and the gear side plates 21C are pressed by the piston 21D and frictionally engaged with each other, whereby the connection of the first rotational shaft 6 to the counter gear 20 becomes possible.

As a result, the rotation of the first rotational shaft 6 is transmitted to the second rotational shaft 10 through the intermediate gear 15 from the counter gear 20 and further transmitted to the output shaft 16 through the driven gear 19 from the drive gear 14. As described above, the rotation of the first rotational shaft 6 and the rotation of the second rotational shaft 10 are transmitted to the output shaft 16 in the synthesized state, and the output shaft 16 can rotate at a low speed and with a high torque.

Here, when the rotations of the first and second rotational shafts 6 and 10 are synthesized and the output shaft 16 is rotated at a low speed and with a high torque, a load in the thrust direction is generated in the meshed portion between the counter gear 20 and the intermediate gear 15 made of helical gears, and this thrust load acts on the bearing device 23 through the counter gear 20. Particularly, in the excavating operation in which the wheel loader is made to travel and the bucket is shoved in the stacked earth and sand, the traveling speed of the wheel loader is lowered by resistance of the earth and sand, and the wheel loader enters the stall operation state in which the rotation numbers of the first and second rotational shafts 6 and 10 (wheels of the wheel loader) become the minimum (substantially 0) and the torque becomes the maximum. In such stall operation state, a large thrust load acts on the bearing device 23.

On the other hand, in the first embodiment, the bearing device 23 is configured as four tandem/back-to-back duplex bearings composed of four angular contact ball bearings 24 and arranged at a position corresponding to the meshed portion between the counter gear 20 and the intermediate gear 15. As a result, even if the large thrust load acts on the bearing device 23, this thrust load is reliably received by each of the angular contact ball bearings 24, whereby abnormal wear such as fretting wear and impressions caused by riding onto a lace surface can be reliably suppressed. As a result, the lifetime of the bearing device 23 can be prolonged, and reliability of the power transmission device 1 can be enhanced.

Moreover, by giving a fixed-position preload to each of the angular contact ball bearings 24 by using the nut 27, rigidity of the entire bearing device 23 can be enhanced. As a result, even if the stall operation state is repeated, for example, the bearing device 23 can reliably receive the large thrust load acting on the counter gear 20. As a result, the counter gear 20 which receives the large thrust load can be smoothly rotated for a long time, and reliability of the power transmission device 1 can be further enhanced.

Thus, according to the first embodiment, the bearing device 23 provided between the first rotational shaft 6 and the counter gear 20 is configured as four tandem/back-to-back duplex bearings composed of four angular contact ball bearings 24, and this bearing device 23 is configured to be arranged at the position corresponding to the meshed portion between the counter gear 20 and the intermediate gear 15. As a result, the high-speed rotation of the counter gear 20 and durability against the thrust load can be both realized, and the lifetime of the power transmission device 1 can be prolonged, and the reliability can be enhanced.

Further, by arranging the bearing device 23 composed of the plurality of angular contact ball bearings 24 in the axial direction of the first rotational shaft 6, even if the space formed between the first rotational shaft 6 and the counter gear 20 is limited to small, the counter gear 20 can be reliably supported by each of the angular contact ball bearings 24. As a result, the size of the entire power transmission device 1 can be reduced, and contribution can be made to a reduction in a manufacturing cost.

On the other hand, in the first embodiment, the brake device 22 is provided between the counter gear 20 and the casing 2, and the brake device 22 is configured to apply the braking force to the counter gear 20 provided capable of relative rotation with respect to the first rotational shaft 6. As a result, the braking torque can be kept smaller than the case of directly applying the braking force to the first rotational shaft 6 or the second rotational shaft 10, for example. As a result, the size of the brake device 22 can be reduced, and the size of the entire power transmission device 1 can be reduced.

Moreover, in the first embodiment, the front-side plate mounting portion 20C and the rear-side plate mounting portion 20D are provided on the both end sides in the axial direction of the cylindrical portion 20A constituting the counter gear 20, each of the gear side plates 21C of the clutch device 21 is provided on the front-side plate mounting portion 20C, and each of the gear side plates 22B of the brake device 22 is provided on the rear-side plate mounting portion 20D. As a result, the clutch device 21 and the brake device 22 can be arranged coaxially on the axis line of the first rotational shaft 6. Accordingly, the space accommodating the clutch device 21 and the brake device 22 can be kept small, and the size of the power transmission device 1 can be further reduced.

Furthermore, in the first embodiment, the intermediate gear 15, the counter gear 20, and the bearing device 23 are arranged on the same plane perpendicular to the axis lines of the first and second rotational shafts 6 and 10 and the output shaft 16, and the drive gear 14, the driven gear 19, and the clutch device 21 are arranged on the same plane perpendicular to the axis lines of the first and second rotational shafts 6 and 10 and the output shaft 16 adjacent to the intermediate gear 15 and the counter gear 20. In addition, the brake device 22 is arranged on the opposite side to the clutch device 21 sandwiching the counter gear 20 between them.

Therefore, the bearing device 23 can be arranged by using the space where the intermediate gear 15 is meshed with the counter gear 20, and the clutch device 21 can be arranged by using the space where the drive gear 14 is meshed with the driven gear 19. As a result, the axial dimension of the casing 2 along the axis lines of the first and second rotational shafts 6 and 10 and the output shaft 16 can be kept small, and the size of the entire power transmission device 1 can be further reduced.

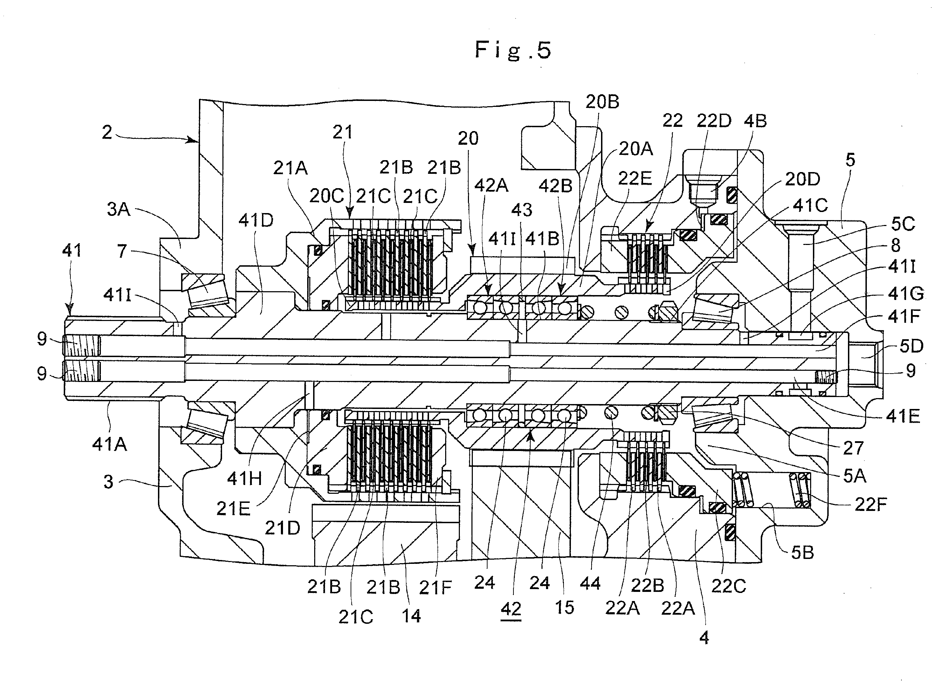

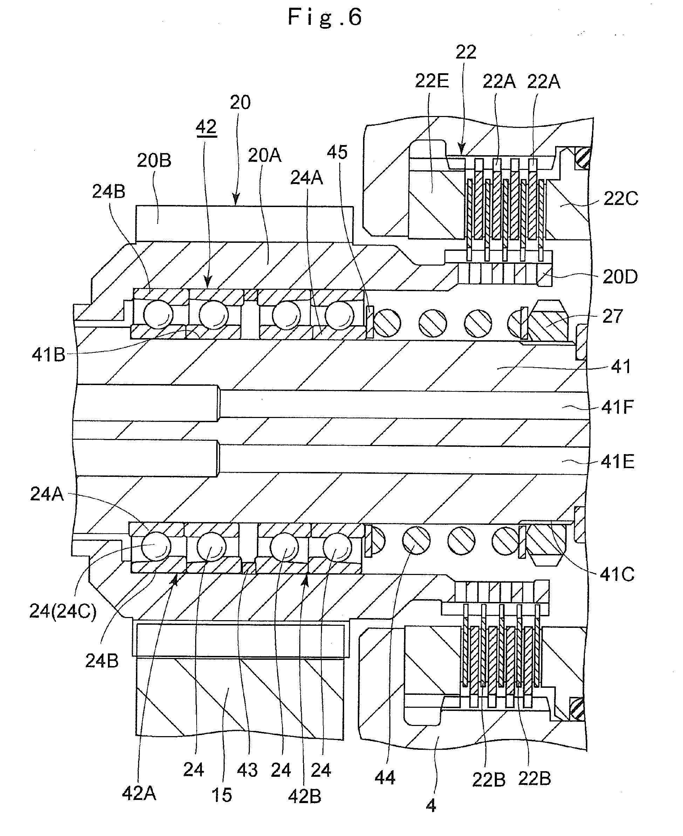

Next, Figs. 5 and 6 illustrate a second embodiment of the present invention. This embodiment is characterized in that a bearing device is arranged between a first rotational shaft and a counter gear while a fixed-pressure preload is given to each of the angular contact ball bearings of the bearing device. In this embodiment, the component elements that are identical to those of the foregoing first embodiment will be simply denoted by the same reference numerals to avoid repetitions of similar explanations.

In the figure, designated at 41 is the first rotational shaft supported rotatably through the tapered roller bearings 7 and 8 in the casing 2, and the first rotational shaft 41 is used in this embodiment instead of the first rotational shaft 6 according to the first embodiment. Here, the first rotational shaft 41 has a shaft spline portion 41A spline-connected to the first hydraulic motor 30, a bearing mounting portion 41B on which a bearing device 42, which will be described later, is mounted, a male screw portion 41C into which the nut 27 is screwed, and a clutch mounting portion 41D on which the clutch device 21 is mounted substantially similarly to that according to the first embodiment. On the other hand, a clutch pressure passage 41E, a lubricant oil passage 41F, an annular groove 41G, a clutch pressure discharge passage 41H, and four lubricant oil discharge passage 41I are formed in the first rotational shaft 41. However, the first rotational shaft 41 according to the second embodiment is different from the first rotational shaft 6 according to the first embodiment in a point that the male screw portion 41C is formed at a position separated rearward from the bearing mounting portion 41B.

Designated at 42 is the bearing device applied to the second embodiment, and the bearing device 42 is provided between the bearing mounting portion 41B of the first rotational shaft 41 and the cylindrical portion 20A of the counter gear 20 and supports the counter gear 20 capable of relative rotation with respect to the first rotational shaft 41. The bearing device 42 is configured as four tandem/back-to-back duplex bearings composed of four angular contact ball bearings 24 in which a pair of tandem duplex bearings 42A having the two angular contact ball bearings 24 tandem-duplex combined and a pair of tandem duplex bearings 42B in which the two angular contact ball bearings 24 are similarly tandem-duplex combined with the back faces opposed to each other similarly to the bearing device 23 according to the first embodiment. However, the bearing device 42 is different from that according to the first embodiment in a point that a fixed-pressure preload is given by a preload spring 44, which will be described later.

Indicated at 43 is a cylindrical outer race side spacer arranged between the two pairs of tandem duplex bearings 42A and 42B combined back to back. This outer race side spacer 43 is inserted and fitted on the inner periphery side of the cylindrical portion 20A of the counter gear 20 while sandwiching the two pairs of tandem duplex bearings 42A and 43B. Therefore, the outer race side spacer 43 is brought into abut against each of the outer races 24B of the adjacent angular contact ball bearings 24 between the two pairs of tandem duplex bearings 42A and 42B, whereby the interval is set.

Designated at 44 is the preload spring provided between the bearing device 42 mounted on the first rotational shaft 41 and the nut 27 screwed into the male screw portion 41C of the first rotational shaft 41, and the preload spring 44 is made of a compression coil spring and gives a fixed-pressure preload to each of the angular contact ball bearings 24 constituting the bearing device 42.

Here, the preload spring 44 is configured to be brought into abut against the inner race 24A of the angular contact ball bearing 24 located at the last of the four angular contact ball bearings 24 through a washer 45 and presses each of the angular contact ball bearings 24 in the axial direction in accordance with a screwed-in amount of the nut 27 with respect to the male screw portion 41C of the first rotational shaft 41.

The power transmission device according to the second embodiment uses the above-described bearing device 42, the preload spring 44 and the like and its basic operation is not particularly different from that using the bearing device 23 and the like according to the above-described first embodiment.

Thus, according to the second embodiment, the fixed-pressure preload is given to each of the angular contact ball bearings 24 constituting the bearing device 42 by using the preload spring 44. Accordingly, even if the counter gear 20 is rotating at a high speed, each of the angular contact ball bearings 24 can appropriately follow the rotation of the counter gear 20 and can rotate smoothly. As a result, the counter gear 20 can relatively rotate at a high speed with respect to the first rotational shaft 41 rotating at a low speed, and reliability of the power transmission device can be enhanced.

Further, even if the first rotational shaft 41 is expanded/contracted due to the circumferential temperature difference or the like, for example, a substantially constant preload force can be given by the preload spring 44 to each of the angular contact ball bearings 24 constituting the bearing device 42. As a result, even if the power transmission device is operated for a long time, the rotation of the counter gear 20 supported by the bearing device 42 can be stabilized, and reliability of the power transmission device can be enhanced.

It should be noted that, in the aforementioned first embodiment, the example in a case which the nut 27 is used as means for giving the fixed-position preload to each of the angular contact ball bearings 24 of the bearing device 23 is exemplified. However, the present invention is not limited to the same, and it may be configured such that each of the angular contact ball bearings 24 is pressed in the axial direction by using a bolt and the like, for example.

In the above-described second embodiment, the example in which the preload spring 44 made of a compression coil spring is used as means for giving the fixed-pressure preload to each of the angular contact ball bearings 24 of the bearing device 42 is exemplified. However, the present invention is not limited to the same, and it may be configured such that each of the angular contact ball bearings 24 is pressed in the axial direction by using a disk spring and the like, for example.

### DESCRIPTION OF REFERENCE NUMERALS

1: Power transmission device
2: Casing
6, 41: First rotational shaft
10: Second rotational shaft
14: Drive gear
15: Intermediate gear
16: Output shaft
19: Driven gear
20: Counter gear
20A: Cylindrical portion
20B: Gear portion
20C: Front side plate mounting portion
20D: Rear side plate mounting portion
21: Clutch device
21B: Rotation axis side plate
21C: Gear side plate
22: Brake device
22A: Casing side plate
22B: Gear side plate
23, 42: Bearing device
24: Angular contact ball bearing
27: Nut
30: First hydraulic motor
31: Second hydraulic motor
44: Preload spring

## Claims

1. A power transmission device comprising:
a cylindrical casing (2);
a first rotational shaft (6, 41) supported rotatably in said casing (2) and driven by a first hydraulic motor (30) rotating at a low speed;
a second rotational shaft (10) supported rotatably and juxtaposed with said first rotational shaft (6, 41) in said casing (2), having a drive gear (14) provided thereon, and driven by a second hydraulic motor (31) rotating at a high speed;
an output shaft (16) supported rotatably and juxtaposed with said second rotational shaft (10) in said casing (2), and having a driven gear (19) provided thereon and to which rotation of said second rotational shaft (10) is transmitted by meshing between said driven gear (19) and said drive gear (14); and
a clutch device (21) switched between a connected state in which rotation of said first rotational shaft (6, 41) and rotation of said second rotational shaft (10) are synthesized and transmitted to said output shaft (16) and a non-connected state in which the rotation of said second rotational shaft (10) is transmitted to said output shaft (16), **characterized in that**:
an intermediate gear (15) is fixed to said second rotational shaft (10);
a counter gear (20) meshed with said intermediate gear (15) is arranged on an outer periphery side of said first rotational shaft (6, 41);
a bearing device (23, 42) which supports said counter gear (20) capable of relative rotation with respect to said first rotational shaft (6, 41) is provided between said counter gear (20) and said first rotational shaft (6, 41);
said clutch device (21) is arranged between said first rotational shaft (6, 41) and said counter gear (20);
said bearing device (23, 42) is arranged at a position corresponding to a meshed portion between said counter gear (20) and said intermediate gear (15); and
said bearing device (23, 42) is arranged in the axial direction of said first rotational shaft (6, 41) by combining a plurality of angular contact ball bearings (24).

2. The power transmission device according to claim 1, wherein said bearing device (23, 42) is configured as four tandem/back-to-back duplex bearings in which two pairs of tandem duplex bearings (23A, 23B), (42A, 42B) are combined back-to-back.

3. The power transmission device according to claim 1, wherein said bearing device (23) is arranged between said first rotational shaft (6) and said counter gear (20) while a fixed-position preload is applied to each of said angular contact ball bearings (24) by using a nut (27) screwed to said first rotational shaft (6).

4. The power transmission device according to claim 1, wherein said bearing device (42) is arranged between said first rotational shaft (41) and said counter gear (20) while a fixed-pressure preload is applied to each of said angular contact ball bearings (24) by using a spring (44).

5. The power transmission device according to claim 1, further comprising a brake device (22) provided between said counter gear (20) and said casing (2), which applies a braking force to said counter gear (20) when each of said hydraulic motors (30, 31) is stopped and releases the braking force to said counter gear (20) when each of said hydraulic motors (30, 31) is operating.

6. The power transmission device according to claim 5, wherein said clutch device (21) has a plurality of rotation axis side plates (21B) rotating integrally with said first rotational shaft (6, 41) and a plurality of gear side plates (21C) rotating integrally with said counter gear (20);
said brake device (22) has a plurality of casing side plates (22A) provided on said casing (2) and a plurality of gear side plates (22B) rotating integrally with said counter gear (20);
said counter gear (20) is composed of a cylindrical portion (20A) arranged on the outer periphery side of said first rotational shaft (6, 41) through said bearing device (23, 42) and extending in the axial direction, a gear portion (20B) provided on the outer periphery side of said cylindrical portion (20A) and meshed with said intermediate gear (15), and plate mounting portions (20C, 20D) provided on both sides in the axial direction of said cylindrical portion (20A); and
each of said gear side plates (21C) of said clutch device (21) is provided on said plate mounting portion (20C) provided on one side in the axial direction of said cylindrical portion (20A), and each of said gear side plates (22B) of said brake device (22) is provided on said plate mounting portion (20D) provided on the other side in the axial direction of said cylindrical portion (20A).

7. The power transmission device according to claim 1, wherein said first rotational shaft (6, 41),said second rotational shaft (10), and said output shaft (16) are arranged in parallel in said casing (2);
said intermediate gear (15), said counter gear (20), and said bearing device (23, 42) are arranged in said casing (2) on the same plane perpendicular to the axis lines of said first and second rotational shafts (6, 41), (10) and said output shaft (16);
said drive gear (14), said driven gear (19), and said clutch device (21) are arranged in said casing (2) on the same plane perpendicular to the axis lines of said first and second rotational shafts (6, 41), (10) and said output shaft (16) adjacent to said intermediate gear (15) and said counter gear (20); and
said brake device (22) is arranged in said casing (2), located on the opposite side to said clutch device (21) sandwiching said counter gear (20) therebetween.
